Europäisches Patentamt

European Patent Office

Office européen des brevets

(11) Publication number: **0 074 574**

**A1**

## (12) EUROPEAN PATENT APPLICATION

(21) Application number: **82108118.9**

(22) Date of filing: **02.09.82**

(51) Int. Cl.³: **G 01 L 9/04**

(30) Priority: **14.09.81 US 301669**

(43) Date of publication of application:
**23.03.83 Bulletin 83/12**

(84) Designated Contracting States:
**DE FR GB**

(71) Applicant: **THE PERKIN-ELMER CORPORATION**
**Main Avenue**
**Norwalk Connecticut 06856(US)**

(72) Inventor: **Mount, Bruce E.**

**Diamond Bar California(US)**

(74) Representative: **Patentanwälte Grünecker, Dr.**
**Kinkeldey, Dr. Stockmair, Dr. Schumann, Jakob, Dr.**
**Bezold, Meister, Hilgers, Dr. Meyer-Plath**
**Maximilianstrasse 43**
**D-8000 München 22(DE)**

(54) Flow-through fluid pressure transducer.

(57) A flow-through pressure transducer comprising a cylindrical diaphragm positionable to allow fluid to flow therethrough which responds to variations in fluid pressure to generate an electrical signal proportional to such variations and which is incorporated in a housing for interconnecting with fluid delivery tubing. The diaphragm is made of relatively thin resilient metal, shaped to be a tube, elliptical in cross-section, with transducers, located on the elliptical major and minor axes which change their electrical state in response to movement of the diaphragm walls, and which are coupled in a bridge circuit for signal measurement. The housing is constructed for either gage or absolute fluid pressure measurements.

FIG.1

-1-

## TITLE

## FLOW-THROUGH FLUID PRESSURE TRANSDUCER

## BACKGROUND OF THE INVENTION

This invention relates to fluid pressure devices and specifically to a new and improved pressure transducer which has many medical and non-medical applications.

## Existing Technology

Surgical patients, patients recovering from surgical procedures, and patients with diseases affecting the lungs commonly are connected to a mechanical or electromechanical breathing device or respirator, by first inserting a tube into the trachea to clear the airway, then connecting an air hose from the respirator to the tracheal tube, and finally, causing the patients' lungs to inflate by means of positive pressure applied by the respirator device. The lungs are allowed to deflate through a one-way respiratory valve and reinflated at predetermined intervals and with preselected air volumes. A measure of pressure within the air delivery tubing is of use to the physician (1) to prevent excessive pressures from being applied to the lung, and (2) to enable calculation of various parameters relating to the condition of the lung and bronchial passages, such as lung compliance, airway resistance, and work of breathing.

Problems With Present Technology

Airway pressure is commonly measured by connecting a conventional low-range pressure transducer to the patient's air delivery tube via a smaller air tube which delivers pressure variations to a remotely located transducer. Alternatively, a miniature pressure transducer may be connected directly into the air delivery tubing system via a small side port.

Airway pressure delivered by conventional mechanical ventilators are typically in the range of 20 $cmH_2O$, with a maximum full-scale value of 100 $cmH_2O$. Zero baseline stability of $\pm$ one $cmH_2O$ is desirable. The disadvantages of the conventional approaches are:

A) When Used With Conventional Low-Range Pressure Transducers.

1. The interconnecting tubing necessary with conventional low-range pressure transducers rapidly becomes blocked with water condensation from the high-humidity warm air in the system, which causes poor transient response and flow signal artifacts.

2. Extra volume is added to the air delivery system by the extra tubing and transducer cavity. This air is "trapped" i.e., not directly in the flow stream.

3. Cleaning and sterilization of the transducer and tubing is difficult.

B) When Used With Miniature Pressure Transducers.

Miniature transducers which can be connected directly to the air delivery system without extra tubing are difficult to construct with adequate sensitivity and zero stability for the low pressure ranges needed.

In addition to the foregoing deficiencies in the present technology it is apparent that an electrical voltage proportional to air pressure variations in the air delivery system is needed to interface a measure of these pressure variations into analog and digital computing and data handling devices which are in common use by patient care institutions.

Industrial uses for low range pressure transducers include a wide range of process control and measurement applications. Wherever a non-obstructive, easily cleanable pressure measurement device is needed, whether low-range or high range pressures are involved, this invention is particularly applicable. It also offers the advantage of a transducer which has an outside diameter comparable to that of the external connecting tubing.

SUMMARY OF THE INVENTION

The flow-through pressure transducer of the invention comprises a cylindrical diaphragm positionable to allow fluid to flow therethrough which responds to variations in fluid pressure to generate an electrical signal proportional to such variations and which is incorporated in a housing for interconnecting with fluid delivery tubing. The diaphragm is made of relatively thin resilient metal, shaped to be elliptical in cross-section, with strain sensitive transducers (gauges) located at the elliptical major and minor axes, and which are coupled in a bridge circuit. The housing is constructed for either gage or absolute fluid pressure measurements.

BRIEF DESCRIPTION OF THE DRAWINGS

Figure 1 is a simplified perspective view of an elliptical diaphragm incorporating the principles of the invention,

Figure 2 is a simplified schematic circuit diagram used in connection with the diaphragm of Figure 1,

Figure 3 is a perspective view similar to Figure 1 as an alternative embodiment of the invention,

Figure 4 is an elevational view in a cross-section illustrating the diaphragm in a pressure transducer in a typical environment,

Figure 5 is an end view of the transducer of Figure 4.

Figure 6 illustrates an alternative embodiment of the pressure transducer of Figure 4.

DETAILED DESCRIPTION

The drawings illustrate a pressure transducer 10 having a resilient metallic cylinder or diaphragm 12, elliptical in cross-section, with a minor axis d1 and a major axis d2 of a selected length 1 incorporated in a housing 14. Attached to the outer surface of the diaphragm 12 are four strain gauges G1-G4 -- two gauges G1 and G3 located on the major axis and two gauges G2 and G4 located on the minor axis i.e., maximum and minimum curvature of the diaphragm, respectively.

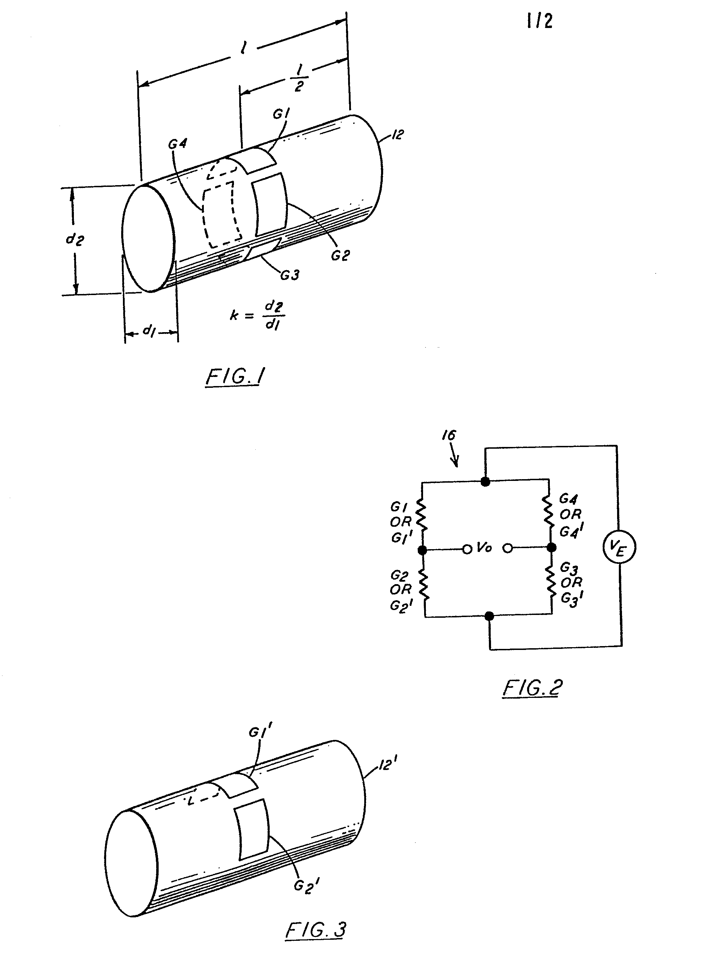

These strain gauges are connected by wiring, (not shown in Figures 1 and 3) in a bridge circuit 16 illustrated in Figure 2 with the resistances of the strain gauges represented in the conventional manner. The bridge is subject to an excitation voltage Ve and the output voltage is represented by Vo. Bridge scaling and zero offset circuits can be added if necessary but are not shown.

The resistances of the gauges are all equal in the equilibrium state, but when the pressure inside the diaphragm 12 becomes greater than the pressure outside the diaphragm, gauges G1 and G3 will be compressed and the resistances will be decreased. At the same time gauges G2 and G4 will be in tension and their resistances will increase. In the bridge circuit, the output voltage Vo will be 0.0 V in equilibrium state and will tend to increase or decrease in proportion to the pressure increase or decrease inside the diaphragm.

Linearity of the system is enhanced when two gauges are in compression while two gauges are in tension, however, in certain cases the alternative embodiment of Figure 3 is satisfactory. In this latter, only two strain gauges, G1' and G2', are used on the elliptical diaphragm 12'. Strain gauge G1' is positioned at the point of maximum curvature of the diaphragm and the other gauge G2' is positioned on the minimum curvature of the diaphragm. To complete the bridge circuit of Figure 2, two resistances G3' and G4' are connected externally of the transducer.

By way of example, a typical output voltage Vo with four strain gauges and an excitation voltage Ve of 5.0V DC is 1.0 millivolt for a full-scale pressure of 100 $cmH_2O$. This output voltage may be amplified by a conventional integrated circuit amplifier to voltages acceptable for processing by a conventional data handling device.

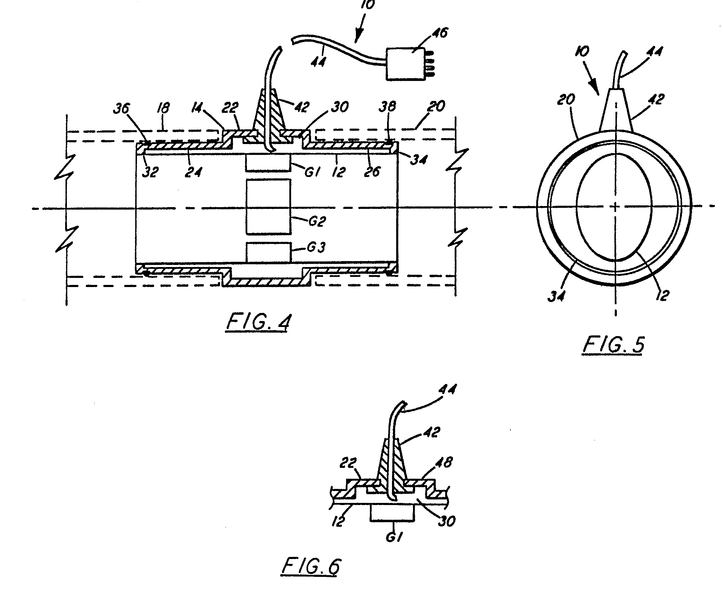

Turning now specifically to Figures 4 and 5, it can be seen that the housing 14 serves as a rigid support for the diaphragm and as an interconnecting adaptor for external air delivery tubing 18 and 20. The housing is provided with a central portion 22 of a larger diameter than the two end coupling sleeves 24 and 26 to receive the interconnecting tubing 18 and 20. As shown, the enlarged central portion is equal to the outside diameter of the tubing 18 and 20 and defines an inner main cavity 30 which extends a length greater than the width of the strain gauges. The outside wall of the diaphragm forms the inner wall of cavity 30, actually cavity 30 is open almost the full length of the diaphragm ending at flanges 32 and 34. The coupling sleeves 24 and 26 are provided on their outer ends with grooves and O-ring seals 36 and 38 for suitably sealing the sleeves to the tubing 18 and 20. The inwardly directed flanges 32 and 34 are circular at their outer diameter and extend inwardly and configured to support the diaphragm 12. The flanges greatest extension inwardly is adjacent the minor axis of the diaphragm. The diaphragm 12 is permanently, sealingly, attached to these flanges 32 and 34 and suspended therebetween. The flanges space the major axis of the diaphragm from the inner wall of the sleeves so as to allow the diaphragm free to expand under pressure centrally of the area of the strain gauges.

From the foregoing it can be seen that the large area diaphragm 12 acting as an inside liner for the transducer 10 and provides a smooth inner surface which can be easily cleaned and kept free of contaminants.

Finally, the central portion 22 is provided with a grommet 42 containing the wiring 44 connecting the strain gauges to the external circuitry via an electrical connector 46.

In the embodiment of Figure 4, the area surrounding the cavity 30 (including the space between the diaphragm and the inner walls of the sleeves) is sealed to form an absolute pressure transducer while Figure 6 illustrates this cavity 30 vented to atmosphere through an aperture 48 so that the transducer becomes a gage pressure unit.

A practical embodiment of this invention utilized a diaphragm of stainless steel 0.007" thick, 2.7" long with a major axis of 0.750" and a minor axis of 0.600"; the k factor being 1.25. In this embodiment, Ve was 3.0V and G1 to G4 were 120 ohms each. It should be apparent that a 4:1 length-to-average diameter ratio is a satisfactory ratio, that Inconel may be used instead of the stainless steel, that the stiffness properties of the diaphragm will depend upon the maximum pressure to be measured (but the percentage of diaphragm movement should be kept low), that the elliptical configuration is the most optimum shape, and that while strain gauges were disclosed wherein, other transducers, such as, linear variable differential transformers or capacitive type transducers, may be used.

What is claimed is:

1. A flow-through pressure transducer having a housing adapted to be connected to tubing containing fluid flowing therein comprising,

a resilient, cylindrical diaphragm, non-circular in cross-section having walls which expand and contact in response to said fluid flow,

transducer means responsive to the movement of said walls for producing electrical signals in response to said movement.

2. The transducer as claimed in Claim 1 wherein the diaphragm is elliptical in cross-section.

3. The transducer as claimed in Claim 2 wherein said transducer means includes at least two strain gauges located at the minor and major axes of said elliptical diaphragm.

4. The transducer as claimed in Claim 1 wherein said transducer means includes at least two strain gauges connected at points of maximum and minimum movement of the walls of said diaphragm.

5. The transducer as claimed in Claim 1 wherein the walls of said diaphragm are selected to respond to a range of pressure.

6. The transducer as claimed in Claim 2 wherein said transducer means includes four strain gauges connected to the walls of said diaphragm two gauges and located on the minor axes and two gauges being located on the major axes of said diaphragm.

7.      The transducer as claimed in Claim 6 wherein said transducer means are connected in a bridge network having an excitation voltage source and whose variations in resistances are reflected in an output voltage from said bridge network.

8.      The transducer as claimed in Claim 1 wherein said housing is provided with a pair of sleeve portions for connecting to said tubing and wherein said diaphragm is suspended between the ends of said sleeve portions.

9.      A pressure sensing transducer comprising,

a housing tubular in form with a central raised portion and two sleeve portions extending outwardly therefrom and adapted to interconnect with tubing having fluid flowing therethrough,

a relatively thin elliptical shaped diaphragm within said housing,

flanges on the outer ends of said sleeves engaging the side walls of said diaphragm to suspend the diaphragm in said housing and cooperating with the central raised portion of said housing to define a central cavity formed by the outside walls of said diaphragm and the inside walls of said housing to allow the side walls of said diaphragm to expand and contract in response to fluid flow pressure through said diaphragm,

transducer means located on the outside walls of said diaphragm in the area of the central raised portion and adapted to change their electrical state in response to the expansion and contraction of the walls of said diaphragm, and means for measuring the change of electrical state of said transducer means as an indication of the change in fluid pressure.

10. The pressure transducer as claimed in Claim 1 wherein said transducer means are strain gauges.

$$k = \frac{d_2}{d_1}$$

FIG.1

FIG.2

FIG.3

_FIG. 4_

_FIG. 5_

_FIG. 6_

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | G 01 L    9/04 |
| X,Y | GB-A-  757 597  (NATIONAL RESEARCH CORPORATION) *Claims 1-5; figures* | 1-7,8-10 | |
| | --- | | |
| X,Y | GB-A-1 069 435  (G.V.PLANER LIMITED) *Page 2, lines 11-21,32-55,68-72; figures* | 1-5,7,8-10 | |
| | --- | | |
| X,Y | US-A-4 207 551  (H.KAUTZKY) *Abstract; column 2, lines 63-68; column 3, lines 1-37; column 6, lines 3-10; figures* | 1,3-7,8-10 | |
| | --- | | |
| X,Y | US-A-2 420 148  (R.H.OSTERGREN) *Column 3, lines 37-75; column 4, lines 1-11,39-56; figures 2,4* | 1,5,7,8-10 | TECHNICAL FIELDS SEARCHED (Int. Cl. ³) |
| | --- | | G 01 L    9/04 |
| Y | US-A-2 747 408  (J.E.BOYTIM et al.) *Column 2, lines 1-52,67-71; column 3, lines 1-36; figures* | 1,5,7-10 | |
| | --- | | |
| Y | DE-A-2 810 122  (VDO ADOLF SCHINDLING AG) *Page 7, lines 24-36; page 8, lines 1-11; figure 1* | 1,8-10 | |
| | ----- | | |

| The present search report has been drawn up for all claims | | |
|---|---|---|
| Place of search THE HAGUE | Date of completion of the search 13-01-1983 | Examiner VAN ASSCHE P.O. |